# EUROPEAN PATENT APPLICATION

(11) **EP 4 657 611 A1**
(43) Date of publication of application: **03.12.2025**
(21) Application number: 24753675.8
(22) Date of filing: 08.02.2024
(51) Int. Cl.: H01M 10/6551, H01M 10/613, H01M 10/6552, H01M 10/6556, H01M 50/20

(54) **BATTERY PACKAGE**

(30) Priority: 09.02.2023 KR 20230017464
(71) Applicant: LG Energy Solution, Ltd., Seoul 07335 (KR)
(72) Inventor: JANG, Sunghwan, Daejeon 34122 (KR); SEONG, Junyeob, Daejeon 34122 (KR); SHIN, Juhwan, Daejeon 34122 (KR)
(74) Representative: Plasseraud IP
(86) International application number: PCT/KR2024/001937
(87) International publication number: WO 2024/167354

(57) **Abstract**

A battery package is disclosed. The battery package of the present invention includes: a pack case; a plurality of battery modules accommodated in an accommodating space of the pack case; a heat sink disposed on a lower plate of the pack case; and a thermal resin disposed between the plurality of battery modules and the heat sink to conduct heat from the plurality of battery modules to the heat sink and converted to an insulation layer by ceramicization during thermal runaway of the plurality of battery modules.

## Description

### [TECHNICAL FIELD]

This application claims the benefit of priority based on Korean Patent Application No. 10-2023-0017464 filed on February 9, 2023, entire content disclosed in the document of the patent applications is included as a part of this specification.

The present invention relates to a battery package capable of blocking heat from conducting to an adjacent battery module through a lower plate of a pack case during a thermal runaway of a battery module and preventing a chain reaction of thermal runaway of the adjacent battery module.

### [BACKGROUND ART]

Generally, secondary batteries include an anode, a cathode and an electrolyte, and generate electrical energy using chemical reactions. The use of secondary batteries is gradually increasing due to the advantage of being able to charge and discharge. Since lithium secondary batteries among such secondary batteries have a high energy density per unit weight, lithium secondary batteries are widely used as a power source for electronic communication devices or as a driving source for high-output hybrid vehicles and electric vehicles.

In terms of the shape of these secondary batteries, demand is increasing for prismatic battery cells and pouch-type battery cells that may be applied to products such as mobile phones due to their thin thickness. In terms of materials of battery cells, demand is increasing for lithium battery cells such as lithium-ion batteries and lithium-ion polymer batteries with high energy density, discharge voltage and output stability.

The types of secondary batteries widely used today include lithium ion batteries, lithium polymer batteries, nickel cadmium batteries, nickel hydrogen batteries and nickel zinc batteries. The operating voltage of these battery cells is approximately 2.5V to 4.2V. When a higher output voltage is required, a battery module is constituted by connecting multiple battery cells in series, and a battery pack is constituted by connecting multiple battery modules. In addition, a battery pack is constituted by connecting multiple battery cells in parallel according to the charge and discharge capacity required for the battery pack. Accordingly, the number of battery cells and the electrical connection structure of the battery pack may be selected in various ways according to the required output voltage or charge and discharge capacity.

In the battery package, a barrier beam is installed across a pack case to divide an accommodating space where the battery module is accommodated into a plurality of sections. In the battery package, a thermal resin is disposed between the lower surface of each battery module and the lower plate of the pack case. Accordingly, the thermal energy generated from the battery module is transmitted through the thermal resin and the lower plate. In addition, a heat sink may be additionally installed on the inside or outside of the lower plate to improve the heat dissipation performance of the battery package. In addition, a firewall may be installed between multiple battery modules to prevent flames from spreading to neighboring battery modules.

However, in some cases, the heat generated from the battery module during the charge and discharge process of the battery pack is not effectively dissipated. In such case, the battery module may be degraded as heat is accumulated in some battery module, and thermal runway may occur when the degradation of the battery module is rapidly accelerated.

When thermal runaway occurs in some of the plurality of battery modules, thermal propagation to the neighboring battery modules may progress rapidly through the thermal resin with high thermal conductivity and the lower plate of the pack case, which may promote the chain reaction of thermal runaway. Accordingly, the risk of ignition and explosion of the battery package increases.

In addition, conventionally, development of technology has been focused on using thermal resin to more quickly dissipate thermal energy in the event of ignition or thermal runaway of the battery module. When a thermal resin with excellent heat dissipation performance is embedded in the battery package, thermal propagation to the neighboring battery module may be further accelerated through the thermal resin and the lower plate during when thermal runaway of the battery module. Accordingly, the risk of ignition and explosion of the battery package may be further increased.

In addition, the battery module includes a structure wherein a resin separator is laminated between the anode and the cathode. The polyethylene separator decomposes at approximately 130°C, and the polypropylene separator begins to decompose at approximately 170°C. The electrolyte solution decomposes at approximately 200°C and releases heat. After the battery module rapidly deteriorates in a short period of time, thermal runaway begins at approximately 600-800°C. Accordingly, a technology is required to block the chain reaction of thermal runaway before the battery module deteriorates to the starting temperature of thermal runaway.

The background art of the present invention is disclosed in Korean Patent Application Publication No. 2022-0035770 (published on March 22, 2022, titled Battery Pack With Heat Diffusion Prevention Structure Between Battery Modules).

### [DETAILED DESCRIPTION OF THE INVENTION]

### [TECHNICAL PROBLEM]

In order to solve above-described problems, it is an object of the present invention to provide a battery package capable of improving heat dissipation performance during normal operation of the battery package.

In addition, it is an object of the present invention to provide a battery package including a thermal resin functioning as an insulation layer by ceramicization during thermal runaway of the battery module.

In addition, it is an object of the present invention to provide a battery package capable of blocking heat generated during thermal runaway of the battery module from being conducted to the heater sink and the lower plate.

In addition, it is an object of the present invention to provide a battery package capable of blocking high-temperature heat generated during thermal runaway of a battery module from being conducted to a neighboring battery module through a lower plate or heat sink.

In addition, it is an object of the present invention to provide a battery package capable of preventing a chain reaction of thermal runaway in a neighboring battery module.

In addition, it is an object of the present invention to provide a battery package capable of blocking thermal energy from being diffused or transmitted to a neighboring accommodating space by a barrier beam despite some of the battery modules undergoing thermal runaway.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problem, a battery package according to the present invention includes: a pack case; a plurality of battery modules accommodated in an accommodating space of the pack case; a heat sink disposed on a lower plate of the pack case; and a thermal resin disposed between the plurality of battery modules and the heat sink.

The thermal resin may be converted to an insulation layer when heated above a predetermined temperature.

The thermal resin may conduct heat from the battery module to the heat sink before the conversion.

The thermal resin may be converted to an insulation layer during thermal runaway of the battery module.

The conversion of the thermal resin may be achieved by ceramicization.

The converted thermal resin may include ceramic.

The conversion of the thermal resin may be achieved by generating voids.

The converted thermal resin may include voids.

The converted thermal resin may include ceramic having voids.

The predetermined temperature may be 200°C or higher.

The predetermined temperature may be equal to or lower than the thermal runaway temperature of the battery module. Accordingly, the thermal resin may be converted to an insulation layer by ceramicization during thermal runaway of the battery module.

The predetermined temperature may be 800°C or lower, preferably 600°C or lower, and more preferably 550°C or lower.

The thermal resin may be formed by mixing a resin material and a filler.

The resin material may be vaporized and the filler may be converted into an insulation layer during the thermal runaway of the battery module.

At least a portion of the resin material may be vaporized at the predetermined temperature or higher. The vaporization of the resin material may generate voids.

A portion of the resin material may be carbonized at the predetermined temperature or higher.

The filler may be ceramicized at the predetermined temperature or higher.

The carbonized resin material may form a ceramic structure together with the filler.

The resin material may include at least one of polymethyl methacrylate resin, epoxy resin and urethane resin.

The filler may include at least one of silicon filler, aluminum filler, carbon filler and curing agent.

The thermal resin may be disposed in one-to-one with the battery module.

The thermal resin may be arranged separately from an adjacent thermal resin under the plurality of battery modules.

The heat sink may include a thermally conductive panel in surface contact with the lower plate of the pack case and the thermal resin.

The heat sink may include a cooling channel having a cooling medium flowing therethrough.

At least one barrier beam may be installed inside the pack case to partition the accommodating space where the battery module is accommodated.

### [ADVANTAGEOUS EFFECTS]

According to the present invention, the thermal resin transmits thermal energy generated from the battery module to the heat sink during normal operation of the battery package. Accordingly, the heat dissipation performance may be improved during normal operation of the battery package.

According to the present invention, the thermal resin is ceramicized during thermal runaway of the battery module and functions as an insulation layer. Accordingly, heat of approximately 600-800°C generated during thermal runaway of the battery module may be blocked from being conducted to the heater sink and the lower plate by the insulation layer.

According to the present invention, since the thermal resin is ceramicized during thermal runaway of the battery module, the high-temperature heat generated during thermal runaway of the battery module is blocked from being conducted to the neighboring battery module through the lower plate or heat sink.

According to the present invention, even when the high-temperature heat generated from the battery module is conducted to the heat sink to some extent through the ceramic insulation layer, chain reaction of thermal runaway is prevented from occurring in the neighboring battery module.

In addition, since a plurality of battery modules are maintained in isolation in their respective accommodating spaces by the barrier beam, the barrier beam may prevent thermal energy from spreading or transmitting to the neighboring accommodating spaces despite some battery modules undergoing thermal runaway.

According to the present invention, since a void or space is created as the gas escapes from inside the ceramic insulation layer, the insulation performance of the insulation layer may be further improved by the void or space.

In addition to the advantageous effects described above, specific effects of the present invention will be described further while describing specific details of the present invention.

### [BRIEF DESCRIPTION OF DRAWINGS]

FIG. 1 is a perspective view schematically illustrating a battery package according to the present invention.
FIG. 2 is a cross-sectional view schematically illustrating the battery package in FIG. 1 with a heat sink and thermal resin installed in the lower portion thereof.
FIG. 3 is a cross-sectional view schematically illustrating the battery package in FIG. 1 taken along the line I-I.
FIG. 4 is a cross-sectional view schematically illustrating an example of a heat sink of the battery package in FIG. 1.
FIG. 5 is a cross-sectional view schematically illustrating another example of a heat sink of the battery package in FIG. 1.
FIG. 6 is a cross-sectional view schematically illustrating a battery package according to the present invention having heat dissipated during normal operation thereof.
FIG. 7 is a drawing schematically illustrating a thermal resin of a battery package according to the present invention.
FIG. 8 is a cross-sectional view schematically illustrating a battery package according to the present invention with a thermal resin ceramicized to form an insulation layer during thermal runaway.
FIG. 9 is a drawing schematically illustrating a heat conduction phenomenon of a thermal resin according to the present invention.

**[DESCRIPTION OF REFERENCE NUMERALS]**

| | | | |
|---|---|---|---|
| 100: | battery package | 110: | pack case |
| 111: | lower plate | 112: | side plate |
| 113: | upper plate | 115: | barrier beam |
| 116: | accommodating space | 120: | battery module |
| 120a : | thermal runaway battery module | 130: | heat sink |
| 131: | thermally conductive panel | 133: | cooling channel |
| 140: | thermal resin | 141: | resin material |
| 142: | filler | 142a: | insulation layer |
| 144: | air pocket | | |

### [DETAILED DESCRIPTION OF THE PREFERRED EMBODIMENTS]

Hereinafter, a preferred embodiment of the present invention will be described.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, a battery package according to an embodiment of the present invention will be described.

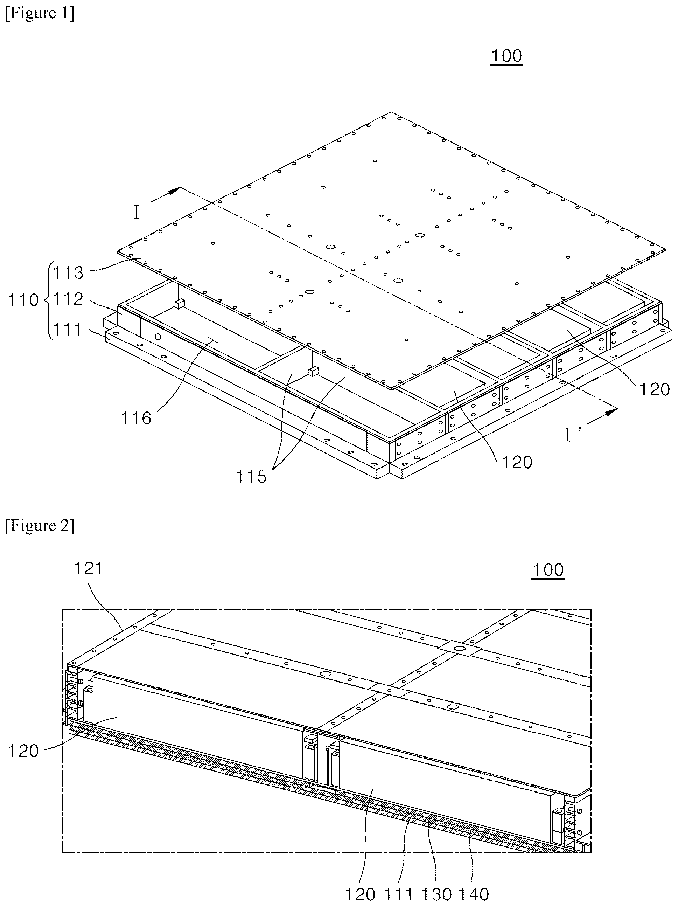

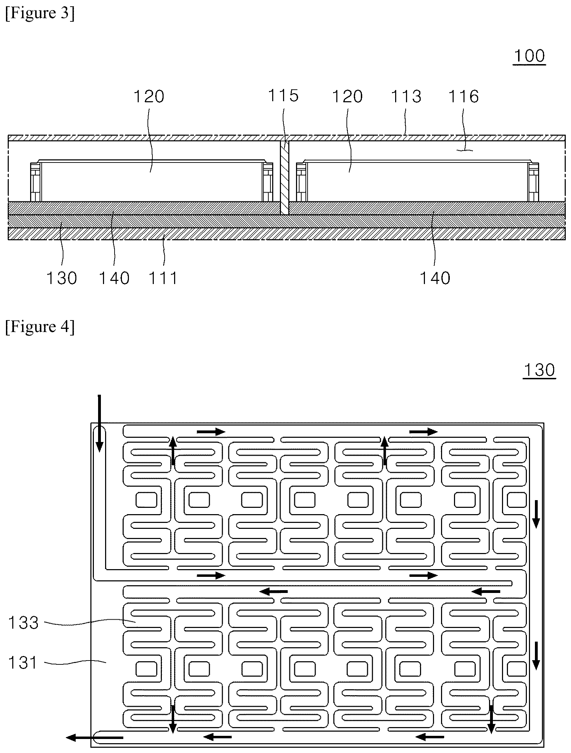

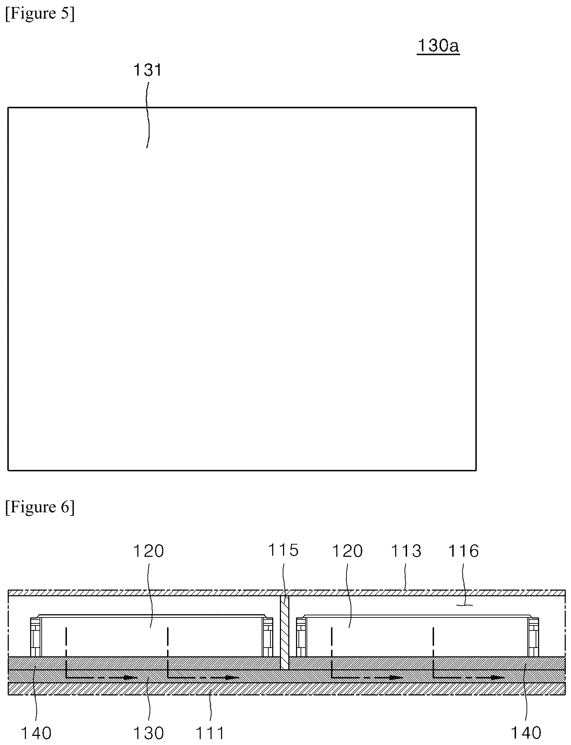

FIG. 1 is a perspective view schematically illustrating a battery package according to the present invention, FIG. 2 is a cross-sectional view schematically illustrating the battery package in FIG. 1 with a heat sink and thermal resin installed in the lower portion thereof, FIG. 3 is a cross-sectional view schematically illustrating the battery package in FIG. 1 taken along the line I-I, FIG. 4 is a cross-sectional view schematically illustrating an example of a heat sink of the battery package in FIG. 1, and FIG. 5 is a cross-sectional view schematically illustrating another example of a heat sink of the battery package in FIG. 1.

Referring to FIGS. 1 to 5, a battery package 100 according to an embodiment of the present invention includes a pack case 110, a plurality of battery modules 120, a heat sink 130 and a thermal resin 140.

The pack case 110 includes a lower plate 111, a side plate 112 surrounding the perimeter of the lower plate 111 and an upper plate 113 covering the upper portion of the side plate 112. The lower plate 111 and the upper plate 113 are rectangular, and the side plate 112 has square frame shape to surround the perimeter of the lower plate 111 and the upper plate 113. The pack case 110 is made of a material with excellent thermal conductivity, such as aluminum, so as to dissipate the thermal energy of the battery module 120.

At least one barrier beam 115 is installed inside the pack case 110 to partition the accommodating space 116 where the battery module 120 is accommodated. The barrier beam 115 is installed to across the pack case 110 to form a grid-shaped accommodating space 116. The upper and lower portions of the barrier beam 115 have a straight beam shape to support the lower plate 111 and the upper plate 113. In addition, the end of the barrier beam 115 supports the side plate 112. The barrier beam 115 blocks the flame and gas in the accommodating space 116 from spreading to the neighboring accommodating space 116. In addition, the barrier beam 115 reinforces the rigidity of the pack case 110. Accordingly, even when the pack case 110 is subjected to an external shock or vibration, the rigidity of the pack case 110 and the barrier beam 115 may prevent the battery package 100 from deforming or collapsing.

Each of the plurality of battery modules 120 is accommodated in the accommodating space 116 of the pack case 110. The battery module 120 is formed by stacking a plurality of battery cells. The battery cell may be any one of a cylindrical battery cell, a prismatic battery cell, or a pouch-type battery cell. The battery cell includes an electrode assembly immersed in an electrolyte solution. The electrode assembly is formed by stacking or winding a cathode, an anode and a separator.

Terminals (not shown) of different polarities are provided to two sides of the battery module 120, respectively. The terminals of the battery module 120 are electrically connected to a plurality of bus bars (not shown) arranged in a bus bar frame (not shown). The bus bars may connect the battery modules 120 in series and in parallel depending on the capacity and output voltage of the battery package 100.

A heat sink 130 is disposed on the lower plate 111 of the pack case 110. The heat sink 130 may be installed on the upper surface of the lower plate 111 or may be installed on the lower surface of the lower plate 111. In addition, the heat sink 130 may be arranged inside the lower plate 111.

The heat sink 130 may include a thermally conductive panel 131 and a cooling channel 133 having a cooling medium flowing therethrough (see FIG. 4). The cooling channel 133 may have a zigzag shape inside the heat sink 130. In addition, the cooling channel 133 may have a straight shape inside the heat sink 130. A cooling medium inlet (not shown) and a cooling medium outlet (not shown) are connected to the cooling channel 133. The cooling medium inlet and the cooling medium outlet may be connected to a cooling medium circulation pump (not shown). Various types of cooling medium, such as coolant and antifreeze, may be employed.

The heat sink 130a may include a thermally conductive panel 131 having a plate shape in surface contact with the lower plate 111 and the thermal resin 140 of the pack case 110 (see FIG. 5). The thermally conductive panel may be a rectangular plate having almost the same size as the lower plate 111. The thermally conductive panel 131 may be manufactured from an aluminum material having excellent thermal conductivity. A cooling channel is not formed in the heat sink 130a.

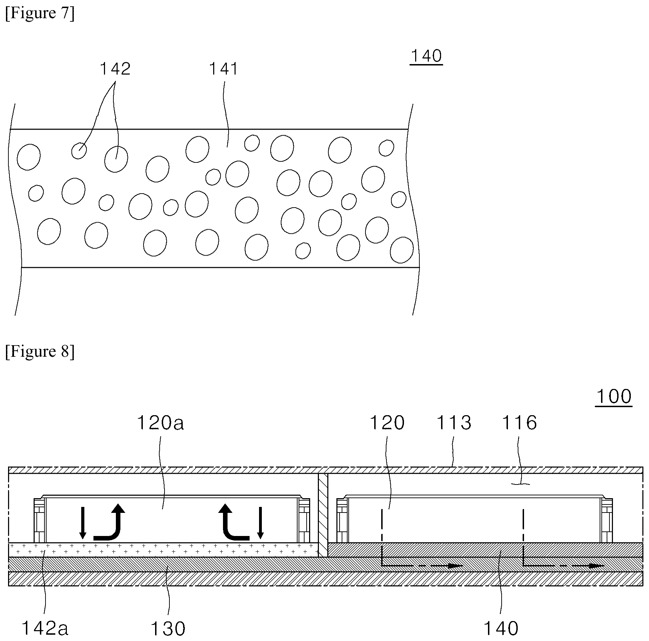

FIG. 6 is a cross-sectional view schematically illustrating a battery package according to the present invention having heat dissipated during normal operation thereof, FIG. 7 is a drawing schematically illustrating a thermal resin of a battery package according to the present invention, and FIG. 8 is a cross-sectional view schematically illustrating a battery package according to the present invention with a thermal resin ceramicized to form an insulation layer during thermal runaway.

Thermal resin 140 is disposed between the lower surface of the battery module 120 and the upper surface of the heat sink 130. The thermal resin 140 transmits thermal energy generated in the battery module 120 to the heat sink 130 during normal operation of the battery package 100 (see FIG. 6). Accordingly, the thermal resin 140 functions as a heat dissipation member or thermally conductive member that transmits thermal energy generated in the battery module 120 to the heat sink 130 during normal operation of the battery package 100. In FIG. 6, the dissipation of thermal energy during normal operation of the battery module is indicated by arrows.

In addition, the battery module (120a: see FIG. 8) may ignite or undergo thermal runaway during the charge and discharge process. The thermal resin 140 is ceramicized during thermal runaway of the battery module 120a and functions as an insulation layer 142a (see FIG. 8). Accordingly, heat of approximately 600-800°C generated during thermal runaway of the battery module 120 may be blocked from being conducted to the heat sink 130 and the lower plate 111 by the insulation layer 142a. As a result, high-temperature heat generated from the ignited battery module 120a is blocked by the insulation layer 142a from being conducted to the neighboring battery module 120. In addition, even when high-temperature heat generated from the battery module 120 is conducted to the heat sink 130 to some extent through the ceramic insulation layer 142a, chain reaction of thermal runaway is prevented from occurring in the neighboring battery module 120.

In addition, since a plurality of battery modules 120 are maintained in isolation in their respective accommodating spaces 116 by the barrier beam 115, the barrier beam 115 may prevent thermal energy from spreading or transmitting to the neighboring accommodating spaces 116 despite some battery modules 120 undergoing thermal runaway.

In this way, when some battery modules 120a undergo thermal runaway, the ceramicized thermal resin 142a blocks the chain reaction of thermal runaway event through the lower plate 111 and the heat sink 130, and the barrier beam 115 suppresses the chain reaction of thermal runaway from occurring in the neighboring space.

In addition, the thermal resins 140 and 142a according to the present invention may selectively provide a heat dissipation function and an insulation function depending on the temperature range of the battery module 120.

Since lithium ion batteries are known to undergo thermal runaway at about 600-800°C, it is preferable that the thermal resin 140 according to the present invention be converted to an insulation layer 142a by ceramicization at about 450-550°C. Apparently, since the thermal runaway temperature of the battery module 120 may vary depending on the components of the constituent materials, the ceramicization temperature of the thermal resin 140 may be designed through a thermal runaway experiment of the battery module 120.

The thermal resin 140 may be formed by mixing a resin material 141 that is vaporized during thermal runaway of the battery module 120 and a filler 142 that is converted to an insulation layer 142a during thermal runaway of the battery module 120. The gas generated by vaporization of from the resin material 141 during the thermal runaway of the battery module 120 may be discharged to the accommodating space 116 surrounded by the barrier beam 115, the ceramicized thermal resin 142a and the upper plate 113. As the resin material 141 vaporizes, the thermal resin 140 is converted to an insulation layer 142a. In addition, since a void or space is created as the gas escapes from inside the ceramic insulation layer 142a, the insulation performance of the insulation layer 142a may be further improved by the void or space.

The resin material 141 may include at least one of polymethyl methacrylate resin, epoxy resin and urethane resin.

As the content of phosphate (Phosphazene) in the epoxy resin increases, the starting temperature of decomposition of the resin composition is raised, and the amount of carbonized products increases. In addition, as the content of phosphate in the epoxy resin increases, the flame retardancy is improved. Accordingly, the ceramicization temperature of the epoxy resin may be adjusted to approximately 450-550°C by controlling the content of phosphate. In addition, the ceramicization temperature of the urethane resin may also be adjusted by controlling the additive or flame retardant component. The epoxy resin and the urethane resin form carbonized products and voids when carbonized at the ceramicization temperature.

The filler 142 may include at least one of a silicon filler, an aluminum filler, a carbon filler and a curing agent.

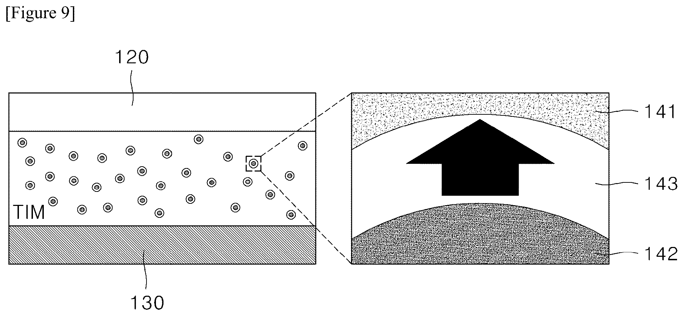

FIG. 9 is a drawing schematically illustrating a heat conduction phenomenon of a thermal resin according to the present invention.

Referring to FIG. 9, the thermal resin 140 including a TIM (Thermal Interface Resin) will be described.

The filler 142 is manufactured by forming a ceramic composite powder by mixing copper sulfide (CuS) with oxide powders such as silicon oxide (SiO₂), iron oxide (Fe₂O₃), magnesium oxide (MgO) and aluminum oxide (Al₂O₃), and subjecting the mixture to heat treatment at 1400°C and rapid cooling. Polymethacrylate (PMMA) with a melting point of 200°C is used as the resin material 141, and copper sulfate (CuS), aluminum oxide (Al₂O₃), and silicon nitride (Si₃N₄) are used as the filler 142 providing a heat dissipation effect.

When the filler 142 is mixed with the resin material 141, an air pocket 144 is formed between the filler 142 and the resin material 141. The air pocket 144 restricts thermal conductivity, but facilitates thermal radiation, which has the characteristic of heat conduction without a medium.

Meanwhile, when the thermal resin 140 is heated to approximately 600-800°C during the thermal runaway of the battery module 120a, the resin material 141 in the thermal resin 140 is vaporized. Accordingly, the thermal resin 140 (TIM material) between the heat sink 130 and the battery module 120 (heat source) is ceramicized, thereby forming an insulation layer 142a.

The thermal resin 140 is disposed in one-to-one with the battery module 120. This is to ensure that only the corresponding thermal resin 140 is ceramicized when the battery module 120 undergoes thermal runaway.

Thermal resins 140 are arranged separately under each battery module 120. A barrier beam 115 is disposed between adjacent thermal resins 140. Here, each thermal resin 140 may be installed so as to cover the entire bottom surface of the accommodating space 116. Accordingly, heat generated in a battery module 120a undergoing thermal runaway may be maximally suppressed from being conducted to the adjacent battery module 120 through the ceramic thermal resin 142a and the heat sink 130.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery package comprising:
a pack case;
a plurality of battery modules accommodated in an accommodating space of the pack case;
a heat sink disposed on a lower plate of the pack case; and
a thermal resin disposed between the plurality of battery modules and the heat sink to conduct heat from the plurality of battery modules to the heat sink and converted to an insulation layer by ceramicization during thermal runaway of the plurality of battery modules.

2. The battery package of claim 1, wherein the thermal resin formed by mixing a resin material and a filler, wherein the resin material vaporizes and the filler is converted to an insulation layer during the thermal runaway of the plurality of battery modules.

3. The battery package of claim 2, wherein the resin material comprises at least one of a polymethyl methacrylate resin, an epoxy resin and a urethane resin.

4. The battery package of claim 2, wherein the filler comprises at least one of a silicon filler, an aluminum filler, a carbon filler and a curing agent.

5. The battery package of claim 1, wherein the thermal resin is disposed in one-to-one with the battery module.

6. The battery package of claim 1, wherein the thermal resin is arranged separately from one another under the plurality of battery modules.

7. The battery package of claim 1, wherein the heat sink comprises a thermally conductive panel in surface contact with the lower plate of the pack case and the thermal resin.

8. The battery package of claim 1, wherein the heat sink comprises a cooling channel having a cooling medium flowing therethrough.

9. The battery package of claim 1, wherein at least one barrier beam is installed inside the pack case to partition the accommodating space where the plurality of battery modules are accommodated.
